# EUROPÄISCHE PATENTANMELDUNG

(11) **EP 1 167 940 A1**
(43) Veröffentlichungstag der Anmeldung: **02.01.2002**
(21) Anmeldenummer: 00810564.5
(22) Anmeldetag: 27.06.2000
(51) Int. Cl.: G01M 3/38, G01N 9/24, G01N 21/45

(54) **Dichtemessverfahren und Dichtemonitor**

(71) Anmelder: ABB Hochspannungstechnik AG, 8050 Zürich (CH)
(72) Erfinder: Brändle, Hubert, Dr., 8102 Oberengstringen (CH); Vestner, Markus, 8238 Büsingen (CH); Meinecke, Herbert, 8400 Winterthur (CH); Arangeh, Dordaneh, 8053 Zürich (CH)
(74) Vertreter: ABB Patent Attorneys

(57) **Zusammenfassung**

Eine Messkomponente (2) zum Messen der Dichte eines Isoliergases (11) in einer Hochspannungsübertragungsleitung (1) umfasst einen mechanischer Gasdichtesensor (21), welcher einen optischen Reflektor (23) proportional zur Gasdichte verschiebt. Der optische Reflektor wird durch einen Lichtstrahl (a₁) beleuchtet. Das reflektierte Licht wird einer optischen Detektionseinrichtung (32) zugeführt und in einen Messwert umgewandelt.

Der Reflektor (23) ist derart beschichtet, dass der Lichtstrahl (a₁) je nach Gasdichte und der resultierenden Reflektorposition relativ zum Lichtstrahl unterschiedlich stark reflektiert wird.

Dank dem rein mechanischen Drucksensor und der optischen Messwertübertragung ist im Bereich der Messkomponente keine Energieversorgung nötig.

## Beschreibung

### TECHNISCHES GEBIET

Bei der Erfindung wird ausgegangen von einem Verfahren zum Überwachen der Gasdichte einer isoliergasgefüllten Hochspannungsübertragungsleitung sowie von einer Gasdichteüberwachungsvorrichtung zur Durchführung dieses Verfahrens.

### STAND DER TECHNIK

Im Hochspannungsbereich sind Verfahren zum Überwachen der Gasdichte von gasisolierten Systemen bekannt, bei welchen beispielsweise mehrere elektrische Messkomponenten von einer zentralen Energiequelle gespiesen werden. Die von den Messkomponenten gelieferten Messwerte werden beispielsweise optisch über Lichtwellenleiter an eine zentrale Signalverarbeitungseinheit übertragen.

Im Bereich von Hochspannungsübertragungsleitungen ist die Speisung der Messkomponenten mittels elektrischer Leitungen nur bedingt möglich. Die Messkomponenten sind entlang der Leitung über mehrere Kilometer verteilt angeordnet und überwachen gegeneinander abgeschottete Leitungsabschnitte. Mehrere km lange Energieversorgungsleitungen würden bei der geringen Speisespannungen eine zu grosse Dämpfung aufweisen und demzufolge wären die Verluste zu gross. Daher werden die Messkomponenten beispielsweise von Batterien gespiesen, die jedoch eine regelmässige Wartung brauchen und zudem eine beschränkte Lebensdauer aufweisen.

### KURZE DARSTELLUNG DER ERFINDUNG

Die Aufgabe der Erfindung besteht darin, ein Verfahren der eingangs genannten Art zu schaffen, mit welchem die Gasdichte einer isoliergasgefüllten Hochspannungsübertragungsleitung selbst über grössere Distanzen weitgehend wartungs- und verlustfrei überwacht werden kann. Zudem soll in eine Gasdichteüberwachungsvorrichtung zur Durchführung eines solchen Verfahrens geschaffen werden.

Diese Aufgabe wird mit dem erfindungsgemässen Verfahren dadurch gelöst, dass ein durch einen mechanischen Gasdichtesensor in Abhängigkeit der Gasdichte bewegter optisches Sensorelement von einer Lichtquelle mit einem Lichtstrahl beleuchtet wird. Der Lichtstrahl wird abhängig von der Gasdichte unterschiedlich stark reflektiert und/ oder transmittiert. Das reflektierte Licht wird über einen Lichtsensor detektiert und in einen elektrischen Messwert umgewandelt.

Die erfindungsgemässe Gasdichteüberwachungsvorrichtung zum Durchführen des erfingungsgemässen Verfahrens umfasst im wesentlichen den mechanischen Gasdichtesensor und das mit diesem gekoppelte, bewegbare, optische Sensorelement.

Da sowohl die Messung der Gasdichte als auch die Übertragung der aus der Messung gewonnenen Information im Bereich des Gasdichtesensors ohne zusätzliche Energiezufuhr auskommen, braucht der Gasdichtesensor nicht mit Energie versorgt zu werden.

Indem ein zweiter Lichtstrahl unterschiedlicher optischer Wellenlänge auf das optische Sensorelement abgegeben und von diesem unabhängig von der Gasdichte gleichbleibend reflektiert und/ oder transmittiert wird, kann die Messgenauigkeit erhöht werden. Der zweite Lichtstrahl wird als Referenzgrösse zur Bestimmung allfälliger Lichtübertragungsverluste eingesetzt.

In einer ersten Ausführungsform ist das Sensorelement als Reflektor ausgebildet. Der Reflektor weist eine eine erste Wellenlänge reflektierende erste Schicht auf, welche in mindestens zwei, die erste Wellenlänge unterschiedlich stark reflektierende Bereiche aufgeteilt ist. Dadurch kann durch die unterschiedlich starke Reflektion beispielsweise das Überschreiten eines bestimmten Gasdichtewerts auf einfachste Weise festgestellt werden.

In einer weiteren Ausführungsform weist der Reflektor eine eine von der ersten Wellenlänge verschiedene zweite Wellenlänge gleichmässig reflektierende zweite Schicht auf. Damit können allfällige Übertragungsverluste anhand einer gleichbleibenden, von der Gasdichte unabhängigen Referenzgrösse festgestellt werden.

In einer weiteren Ausführungsform ist das Sensorelement als Transmittor ausgebildet. Der Transmittor weist eine die erste Wellenlänge absorbierende Schicht auf, welche in mindestens zwei, die erste Wellenlänge unterschiedlich stark absorbierende Bereiche aufgeteilt ist. Durch die unterschiedlich starke Transmission des Lichtstrahls kann beispielsweise das Überschreiten eines bestimmten Gasdichtewerts auf einfachste Weise festgestellt werden.

### KURZE BESCHREIBUNG DER ZEICHNUNGEN

Bevorzugte Ausführungsbeispiele der Erfindung und die damit erzielbaren weiteren Vorteile werden nachfolgend anhand von Zeichnungen näher erläutert. Hierbei zeigt:
- Fig. 1: ein Teil einer isoliergasgefüllten Hochspannungsübertragungsleitung mit einer Vorrichtung zum Überwachen der Gasdichte nach dem Stand der Technik,
- Fig. 2: eine vergrössert dargestellte Ausführungsform der erfindungsgemäss erweiterten Vorrichtung nach Fig. 1, mit einer Messkomponente mit einem optischen Reflektor, und
- Fig. 3: eine vergrössert dargestellte Ausführungsform der erfindungsgemäss erweiterten Vorrichtung nach Fig. 1, mit einer Messkomponente mit einem optischen Transmittor, und
- Fig. 4: eine vergrössert dargestellte Ausführungsform des optischen Reflektors nach Fig. 2 in drei unterschiedlichen Gasdichtesituationen.

### WEG ZUR AUSFÜHRUNG DER ERFINDUNG

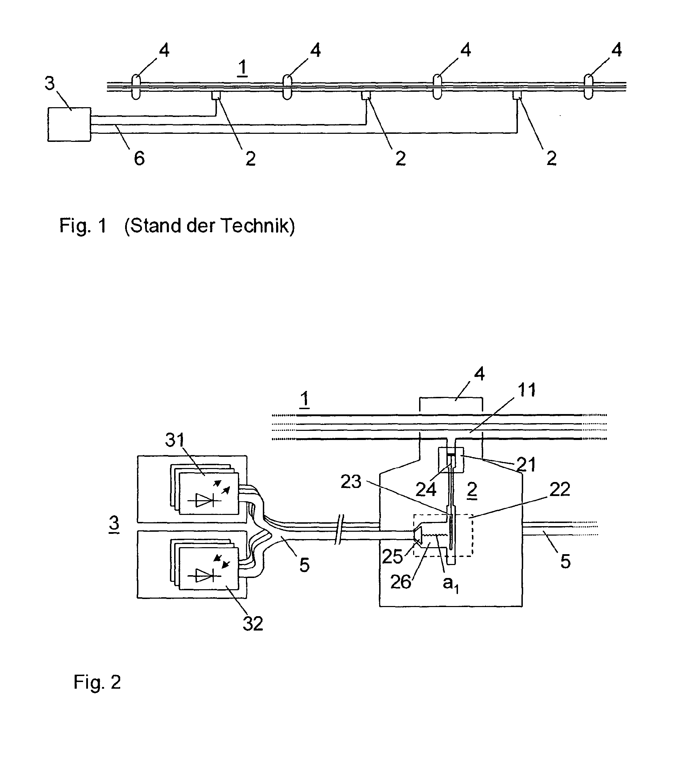

In allen Figuren beziehen sich gleiche Bezugszeichen auf gleichwirkende Teile. Fig. 1 zeigt einen Teil einer gasisolierten Hochspannungsübertragungsleitung 1, welche eine Gesamtlänge von einigen 10 km aufweist. Die Leitung 1 umfasst einen stromführenden Leiter in einem mit Isoliergas (SF₆ und/ oder N₂, unter erhöhtem oder atmosphärischem Druck) gefüllten Kapselungsrohr. Durch mehrere Schottstellen 4 ist die Leitung 1 in mehrere, beispielsweise 0.1 bis 1 km lange Leitungsabschnitte unterteilt. In jedem Leitungsabschnitt ist eine Messkomponenten 2 zum Überwachen der Gasdichte der Leitung 1 angeordnet. Über Signalübertragungsleitungen 6 sind die Messkomponenten 2 mit einer zentralen Überwachungseinheit 3 verbunden. Die Speisung der Messkomponenten 2 erfolgt beispielsweise über Batterien, welche in jeder Messkomponente 2 angebracht sind.

Fig. 2 zeigt vergrössert dargestellt eine erste Ausführungsform der erfindungsgemässen Vorrichtung zum Überwachen der Gasdichte in der isoliergasgefüllten Leitung 1. Im Bereich zumindest jeder zweiten Schottstelle 4 ist eine Messkomponente 2 angeordnet, welche sich im wesentlichen aus einem mechanischen Gasdichtesensor 21, einer mikrooptischen Belichtungseinheit 22 und einem beschichteten optischen Reflektor 23 zusammensetzt.

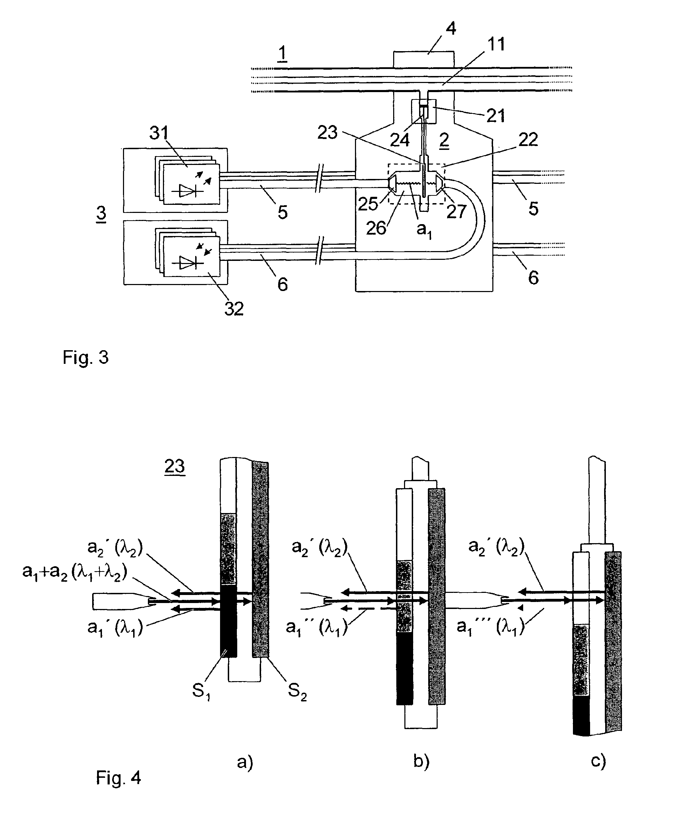

Der mechanische Gasdichtesensor 21 weist ein abhängig von der Dichte des Isoliergases 11 in vertikaler Richtung bewegbares Teil 24 auf. Der Reflektor 23 ist mit dem bewegbaren Teil 24 des Gasdichtesensors 21 verbunden. Der Reflektor weist gemäss Fig. 4 mindestens eine erste Schicht S₁ auf, welche in beispielsweise drei verschiedene Bereiche unterteilt ist, die einen Lichtstrahl a₁ mit einer bestimmten Wellenlänge λ₁ unterschiedlich stark reflektieren. Diese Schicht S₁ ist eine dielektrische Dünnschicht, welche gut haftend auf den optisch transparenten Reflektor aufgedampft ist. Die Schicht S₁ reflektiert lediglich die eine Wellenlänge λ₁. Für andere Wellenlängen ist sie transparent. Die unterschiedlichen Reflektionsstärken können beispielsweise durch unterschiedliche Dichte der Schicht oder durch Abdecken eines Teils der Schicht mit einer photolithographischen Maske realsisiert werden. Auch das Aufdampfen verschiedener Materialien mit entsprechenden unterschiedlichen Reflexionseigenschaften ist möglich. Fig. 4 a), b) und c) zeigen den Reflektor 23 in drei unterschiedlichen Lagen relativ zum Lichtstrahl a₁.

Das Belichtungselement 22 umfasst eine optische Linse 25 und einen Belichtungsbereich 26. Der Reflektor 23 ist im Belichtungsbereich 26 vertikal verschiebbar angeordnet. Über den von der Belichtungseinheit 22 ausgehende Lichtwellenleiter 5 ist die Messkomponente 2 mit einer zentral angeordneten Überwachungseinheit 3 verbunden. Die Überwachungseinheit 3 umfasst im wesentlichen eine Lichtquelle 31 und einen Lichtsensor 32. Die Lichtquelle umfasst mindestens eine Laser-Diode zum Erzeugen eines Lichtstrahls mit einer bestimmten Wellenlängen.

Um die Gasdichte der Leitung 1 zu überwachen, wird von der Lichtquelle 31 ein Mess-Lichtstrahl a₁ mit einer bestimmten Wellenlänge λ₁ von beispielsweise 1550 nm in den Lichtwellenleiter 5 abgegeben. In der Belichtungseinheit 22 wird der Lichtstrahl a₁ durch die Linse 25 in den Belichtungsbereich 26 und dort auf den Reflektor 23 geführt. Der Reflektor 23 ist mit dem vertikal beweglichen Teil 24 des Gasdichtesensors 21 verbunden und ändert seine vertikale Position insbesondere relativ zum Lichtstrahl a₁ abhängig von der Dichte des Isoliergases 11. Je nachdem auf welchen Bereich der Schicht S₁ des Reflektors 23 der Lichtstrahl a₁ fällt, wird er unterschiedlich stark reflektiert. Abhängig von der Dichte des Isoliergases 11 wird somit ein Lichtstrahl a₁', a₁'' oder a₁''' erzeugt, welcher die gleiche Wellenlänge λ₁ hat wie der Lichtstrahl a₁. Der unterste Bereich beispielsweise reflektiert gemäss Fig. 4a) den ganzen Lichtstrahl a₁, somit entspricht die Stärke des reflektierten Lichtstrahls a₁' in etwa der Stärke des Lichtstrahls a₁. Der reflektierte Lichtstrahl a₁'' hat gemäss Fig. 4b) bereits eine wesentlich kleinere Stärke, beispielsweise 50% der Stärke des Lichtstrahls a₁. Der mittlere Bereich der Schicht S₁ reflektiert also lediglich noch die Hälfte des Lichts mit der bestimmten Wellenlänge λ₁. Der reflektierte Lichtstrahl a₁''' hingegen weist gemäss Fig. 4c) beispielsweise lediglich noch 10% der Stärke des Lichtstrahls a₁ auf. Der entsprechende oberste Bereich der Schicht S₁ reflektiert also nur einen sehr geringen Teil des Lichts mit der Wellenlänge λ₁ des Lichtstrahls a₁.

Der reflektierte Lichtstrahl a₁', a₁'' oder a₁''' wird wiederum durch die Linse 25 in den Lichtwellenleiter 5 abgegeben. In der Überwachungseinheit 3 wird der reflektierte Lichtstrahl a₁', a₁'' oder a₁''' im Lichtsensor 32 detektiert und anschliessend ein der Stärke des Lichtstrahls entsprechender elektrischer Messwert erzeugt.

Um unter Berücksichtigung allfälliger optischer Verluste in allenfalls unterschiedlich langen Lichtwellenleitern 5 die Messgenauigkeit verbessern zu können, wird von der Lichtquelle 31 neben dem eigentlichen Mess-Lichtstrahl a₁ ein Referenz-Lichtstrahl a₂ mit einer von der Wellenlänge λ₁ des Mess-Lichtstrahls a₁ verschiedenen Wellenlänge λ₂ in den Lichtwellenleiter 5 abgegeben. Die Wellenlänge λ₂ des Referenz-Lichtstrahls a₂ beträgt beispielsweise 1300 nm. Die beiden Lichtstrahle a₁ und a₂ werden dabei über einen Wellenlängenmultiplexer in den Lichtwellenleiter 5 eingekoppelt. Über die Linse 25 werden die beiden Lichtstrahle a₁ und a₂ gemeinsam dem Reflektor 23 zugeführt. Der Mess-Lichtstrahl a₁ wird, wie beschrieben, von der auf dem Reflektor aufgetragenen Schicht S₁ dichteabhängig unterschieddlich stark reflektiert. Der Referenz-Lichtstrahl a₂ hingegen wird unabhängig von der vertikalen Position des Reflektors 23 gleichbleibend reflektiert. Gemäss Fig. 4 weist der Reflektor 23 neben der ersten Schicht S₁, welche für den Referenz-Lichtstrahl a₂ optisch transparent ist, eine zweite, die Wellenlänge λ₂ des Referenz-Lichtstrahls a₂ reflektierende Schicht S₂ auf. Diese Schicht S₂ ist gleichmässig ausgebildet und reflektiert den Referenz-Lichtstrahl a₂ unabhängig von der Dichte des Isoliergases 11 und der daraus resultierenden vertikalen Lage des Reflektors 23 gleichbleibend. Über die Linse 25 und den Lichtwellenleiter 5 werden der reflektierte Mess-Lichtstrahl a₁', a₁'' oder a₁''' und der reflektierte Referenz-Lichtstrahl a₂' dem Lichtsensor 32 zugeführt. Um die beiden Lichtstrahle trennen zu können, ist ein Wellenlängendemultiplexer zwischen Lichtwellenleiter 5 und Lichtsensor 32 geschaltet. Der aus dem reflektierten Mess-Lichtstrahl Lichtstrahl a₁', a₁'' oder a₁''' gewonnene Messwert wird nun anhand der gemessenen Verluste korrigiert. Die Verluste lassen sich durch Vergleichen der Stärke des von der Lichtquelle 31 eingespiesenen Referenz-Lichtstrahls a₂ mit der Stärke des reflektierten Referenz-Lichtstrahl a₂' leicht bestimmen.

Die Rückführung des reflektierten Lichts kann auch über einen separaten Lichtwellenleiter erfolgen.

Fig. 3 zeigt vergrössert dargestellt eine zweite Ausführungsform der erfindungsgemässen Vorrichtung zum Überwachen der Gasdichte in der isoliergasgefüllten Leitung 1. Anstelle eines Reflektors, der den Mess- und Referenz-Lichtstrahl reflektiert ist ein Transmittor 23 vorgesehen. Der Transmittor ist ebenfalls im Belichtungsbereich 26 vertikal verschiebbar angeordnet. Der Transmittor 23 ist mehrheitlich optisch transparent ausgebildet. Er enthält lediglich eine Schicht, welche Licht der Wellenlänge λ₁ absorbiert. Diese Schicht ist wie beim Reflektor in verschiedene Bereiche unterteilt, welche Licht der Wellenlänge λ₁ jeweils unterschiedlich stark absorbieren. Der über die optische Linse 25 auf den Transmittor gerichtete Mess-Lichtstrahl a₁ wird vom Transmittor somit abhängig von der Gadichte und der daraus resultierenden vertikalen Position des Transmittors relativ zum Lichtstrahl unterschiedlich stark absorbiert. Das durch den Transmittor durchgehende Licht wird über eine weitere optische Linse 27 und ein Lichtwellenleiter 6 dem Lichtsensor 32 zugeführt und in einen elektrischen Messwert gewandelt. Der Referenz-Lichtstrahl mit der Wellenlänge λ₂ wird vom Transmittor unabhängig von der Gasdichte und der daraus resultierenden vertikalen Position des Transmittors relativ zum Lichtstrahl gleichbleibend schwach oder gar nicht absorbiert.

Durch Multiplexen von mehreren Wellenlängen in einen Lichtstrahl können über einen einzigen Lichtwellenleiter meherer Reflektoren/ Transmittoren beleuchtet werden. Jeder Reflektor reflektiert jeweils genau eine Mess- und eine Referenzwellenlänge während er für die anderen Wellenlängen transparent ist. Der Transmittor absorbiert jeweils genau eine Mess-Wellenlänge, während er für andere Wellenlängen transparent ist. Auf diese Weise können mehrere Messkomponenten über einen Lichtwellenleiter angeschlossen werden.

Dank dem rein mechanischen Drucksensor und der optischen Messwertübertragung ist im Bereich der Messkomponente 2 keine Energieversorgung nötig. Das Licht wird ausschliesslich in der zentralen Auswerteeinheit erzeugt. Somit können problemlos auch längere Leitungen 1 überwacht werden, da das Problem der Energiezufuhr der dezentralen Messkomponenten nicht auftritt.

Anstelle des dargestellten, translatorisch verschiebbaren Reflektors kann auch ein drehbar ausgebildeter Reflektor an einem entsprechend ausgebildeten Drucksensor befestigt sein.

Zum Erzeugen von Lichtstrahlen unterschiedlicher Wellenlänge können entweder mehrere einzelne Laser-Dioden oder aber ein Laser mit variierbarer Wellenlänge (Tunable Laser) verwendet werden.

Ist nur bei jeder zweiten Schottstelle 4 eine Messkomponente 2 angeordnet, umfasst diese pro Leitung je zwei Dichtesensoren, Belichtungsbereiche und Reflektoren zum Überwachen beider angrenzender Leitungsabschnitte.

Selbstverständlich kann die Hochspannungsübertragungsleitung, deren Gasdichte mit dem erfindungsgemässen Verfahren mittels der erfindungsgemässen Vorrichtung überwacht wird, auch nur durch eine einzige Schottstelle in lediglich zwei Leitungsabschnitte unterteilt sein.

### BEZEICHNUNGSLISTE

- 1: Gasgefüllte Rohrleitung
- 2: Messkomponente
- 3: Zentrale Überwachungseinheit
- 4: Schottstelle
- 5, 6: Lichtwellenleiter
- 11: Isoliergas
- 21: Mechanischer Dichtesensor
- 22: Belichtungseinheit
- 23: Optisches Sensorelement, Reflektor, Transmittor
- 24: Bewegliches Teil des Dichtesensor
- 25, 27: Optische Linse
- 26: Belichtungsbereich
- 31: Lichtquelle
- 32: Lichtsensor
- S₁, S₁: Reflektierende Schicht
- a₁: Mess-Lichtstrahl
- a₂: Referenz-Lichtstrahl
- a₁', a₁'', a₁''', a₂': Reflektierter/transmittierter Lichtstrahl
- λ₁, λ₂: Wellenlänge

## Patentansprüche

1. Verfahren zum Überwachen der Gasdichte einer isoliergasgefüllten Hochspannungsübertragungsleitung, **dadurch gekennzeichnet, dass**
- mindestens ein optisches Sensorelement (23) abhängig von der Gasdichte bewegt wird, dass
- das optische Sensorelement (23) mit mindestens einem Mess-Lichtstrahl (a₁) mit einer ersten Wellenlänge (λ₁) beleuchtet wird, und dass
- ein vom optischen Sensorelement (23) abhängig von der Gasdichte und der daraus resultierenden Sensorposition relativ zum Mess-Lichtstrahl (a₁) unterschiedlich stark reflektierter und/ oder transmittierter Lichtstrahl (a₁') in einem Lichtsensor (32) detektiert und in einen elektrischen Messwert umgewandelt wird.

2. Verfahren nach Anspruch 1, **dadurch gekennzeichnet, dass**
- das optische Sensorelement (23) mit mindestens einem Referenz-Lichtstrahl (a₂) mit einer von der ersten Wellenlänge verschiedenen, zweiten Wellenlänge (λ₂) beleuchtet wird, und dass
- ein vom optische Sensorelement (23) unabhängig von der Gasdichte und der daraus resultierenden Sensorposition relativ zum Referenz-Lichtstrahl (a₂) gleichbleibend stark reflektierter und/ oder transmittierter Lichtstrahl (a₂') in einem Lichtsensor (32) detektiert und in einen elektrischen Referenzwert umgewandelt wird.

3. Verfahren nach Anspruch 2, **dadurch gekennzeichnet, dass**
- das optische Sensorelement (23) mit einem kombinierten Mess-/Referenz-Lichtstrahl (a₁+a₂) mit der ersten und der zweiten Wellenlänge (λ₁+λ₂) beleuchtet wird.

4. Gasdichteüberwachungsvorrichtung zum Überwachen der Gasdichte einer isoliergasgefüllten Hochspannungsübertragungsleitung, enthaltend
- mindestens eine Messkomponente (2),
- mindestens eine als Lichtwellenleiter ausgebildete Signalübertragungsleitung (5, 6), sowie
- eine mindestens eine Lichtquelle (31) und mindestens einen Lichtsensor (32) umfassende zentrale Überwachungseinheit (3),
**dadurch gekennzeichnet, dass**
die Messkomponente (2) im wesentlichen
- einen mechanischen Gasdichtesensor (21) mit einem beweglichen Teil (24),
- ein mit dem beweglichen Teil (24) gekoppeltes, optisches Sensorelement (23), und
- eine Belichtungseinheit (22) mit einem Belichtungsbereich (26), in welchem das Sensorelement (23) relativ zu einem vom Lichtwellenleiter (5, 6) in den Belichtungsbereich (26) geführten Lichtstrahl (a1, a₂) bewegbar angeordnet ist,
umfasst.

5. Gasdichteüberwachungsvorrichtung nach Anspruch 4, **dadurch gekennzeichnet, dass**
- das optische Sensorelement (23) als Reflektor ausgebildet ist.

6. Gasdichteüberwachungsvorrichtung nach Anspruch 5, **dadurch gekennzeichnet, dass**
- der Reflektor (23) im wesentlichen optisch transparent ausgebildet ist, und dass
- der Reflektor (23) mindestens eine die erste Wellenlänge (λ₁) reflektierende erste Schicht (S₁) aufweist, welche in mindestens zwei, die erste Wellenlänge (λ₁) unterschiedlich stark reflektierende Bereiche unterteilt ist.

7. Gasdichteüberwachungsvorrichtung nach Anspruche 6, **dadurch gekennzeichnet, dass**
- der Reflektor (23) mindestens eine, die zweite Wellenlänge (λ₂) gleichmässig reflektierende zweite Schicht (S₂) aufweist.

8. Gasdichteüberwachungsvorrichtung nach Anspruch 4, **dadurch gekennzeichnet, dass**
- das optische Sensorelement (23) als Transmittor ausgebildet ist.

9. Gasdichteüberwachungsvorrichtung nach Anspruch 8, **dadurch gekennzeichnet, dass**
- der Transmittor (23) im wesentlichen optisch transparent ausgebildet ist, und dass
- der Transmittor (23) mindestens eine die erste Wellenlänge (λ₁) absorbierende erste Schicht (S₁) aufweist, welche in mindestens zwei, die erste Wellenlänge (λ₁) unterschiedlich stark absorbierende Bereiche unterteilt ist.

10. Gasdichteüberwachungsvorrichtung nach Anspruche 9, **dadurch gekennzeichnet, dass**
- der Transmittor (23) mindestens eine, die zweite Wellenlänge (λ₂) gleichmässig absorbierende zweite Schicht (S₂) aufweist.
